# EUROPÄISCHE PATENTANMELDUNG

(11) **EP 4 046 866 A1**
(43) Veröffentlichungstag der Anmeldung: **24.08.2022**
(21) Anmeldenummer: 21158056.8
(22) Anmeldetag: 19.02.2021
(51) Int. Cl.: B60P 1/44, B60R 19/56

(54) **LADEBORDWANDSYSTEM MIT BEWEGLICHEM UNTERFAHRSCHUTZ**

(71) Anmelder: Sörensen Hydraulik GmbH, 21031 Hamburg (DE)
(72) Erfinder: Jensen, Jens Herman, 2942 SKODSBORG (DK)
(74) Vertreter: Glawe, Delfs, Moll

(57) **Zusammenfassung**

Ladebordwandsystem zum Anbau an ein Transportfahrzeug, insbesondere Lastkraftfahrzeuge. Eine lageveränderliche Ladeplattform (2) ist am Transportfahrzeug mittels Tragwerken (3) mit einer Hub- und Senkbewegung bewegbar befestigt. Ein Tragarm (5) mit einem Hubaktuator (57) ist schwenkbeweglich an einem Tragrahmen (4) angeordnet und trägt am anderen Ende schwenkbeweglich die Ladeplattform (2). Am Tragwerk (3) ist ein Unterfahrschutz (6) angeordnet mit einer Stoßstange (61), die zwischen einer Fahrposition und einer weggeschwenkten Ladeposition beweglich ist und mit dem Tragarm (5) verbunden ist. Die Stoßstange (61) ist über einen schwenkbaren Lagerbock (7) mittels einer hybriden Zweipunktlagerung an dem Tragarm (5) und dem Tragrahmen (4) angeordnet ist. Die hybride Zweipunktlagerung umfasst ein reines Drehlager (71) zum Tragarm und ein Translationslager (72) mit Schwenkfreiheitsgrad zum Tragrahmen (4). Somit wird eine zweite Bewegung, nämlich eine Drehbewegung des Lagerbocks überlagert. Dadurch verschiebt sich der Momentanpol der Schwenkbewegung nach oben. Es wird weniger Raum für die Schwenkbewegung des Unterfahrschutzes benötigt.

## Beschreibung

Die Erfindung betrifft ein Ladebordwandsystem mit beweglichem Unterfahrschutz zum Anbau an ein Transportfahrzeug, insbesondere Lastkraftfahrzeuge und deren Anhängern. Es umfasst eine Ladeladeplattform, die mittels am Transportfahrzeug zu befestigender Tragwerke bewegbar ist zum Anheben oder Absenken einer Last auf der Ladeplattform, mit einem schwenkbeweglichen Tragarm sowie einem Hubaktuator aufweist, wobei an dem Tragwerk ferner ein Unterfahrschutz angeordnet ist mit einer Stoßstange, die zwischen einer Fahrposition und einer weggeschwenkten Ladeposition beweglich ist und mit dem Tragarm verbunden ist, so dass sie beim Anheben und Absenken der Ladeplattform mitbewegt ist.

Transportfahrzeuge, insbesondere Lastkraftwagen und Anhänger, weisen zum einfacheren Beladen häufig heb- und senkbare Ladeladeplattform auf. Um schweres Unfallgeschehen durch Heckaufprall von Personenkraftwagen möglichst zu vermeiden, sind gesonderte Unterfahrschutze vorzusehen. Solche werden in einschlägigen Normen gefordert (beispielsweise ECE R58-03). Um sie auch bei Ladebordwandsystemen verwenden zu können, sind sie insbesondere bei größeren Transportfahrzeugen häufig dreiteilig mit Zwischenraum ausgeführt, wobei Tragarme der Ladebordwand sich durch die beiden Zwischenräume bewegen. Die dreiteilige Ausführung verlangt aber entsprechend drei hinreichend robuste Halterungen, was aufwendig ist und Mehrgewicht verursacht, was zu Lasten der Zuladung geht.

Um diese Nachteile zu vermeiden kann der Unterfahrschutz beweglich angebracht werden in der Weise, dass er aus dem Weg geschwenkt wird beim Betätigen der Ladebordwand. Ein derartiges Ladebordwandsystem mit beweglichem Unterfahrschutz ist bekannt aus der EP 2 384 928 A1. Es umfasst eine Ladeladeplattform, die mittels eines am Fahrzeug befestigten Hubaktuator zwischen einer oberen einer unteren Stellung schwenkend hin und her bewegbar ist, sowie einen schwenkbaren Unterfahrschutz, der beim Bewegen des Hubaktuator mitbewegt wird. Dabei schwenkt eine Stoßstange des Unterfahrschutzes beim Absenken der Ladeladeplattform nach unten und nach vorne in Richtung Hinterachse des Transportfahrzeugs.

Jedoch sind zwischenzeitlich striktere Vorschriften erlassen worden in Bezug auf Positionierung des Unterfahrschutzes im Fahrbetrieb. Dieser muss nun tiefer und weiter nach hinten angeordnet sein. Herkömmliche Ladebordwandsysteme können dies meist nicht leisten. Beispielsweise käme es bei dem Ladebordwandsystem gemäß dem vorstehend genannten Stand der Technik zu dem Problem, dass die Schwenkbahn des Unterfahrschutzes zu tief wäre und es zur Bodenberührung käme bzw. der erforderliche Freigang zu Hindernissen, wie Bordsteinen, nicht mehr ausreichend wäre.

Der Erfindung liegt die Aufgabe zugrunde, ein verbessertes Ladebordwandsystem mit Unterfahrschutz zu schaffen, das weniger Raum, insbesondere hinsichtlich der Höhe, für die Schwenkbewegung des Unterfahrschutzes benötigt.

Die erfindungsgemäße Lösung liegt in den Merkmalen des unabhängigen Anspruchs. Vorteilhafte Weiterbildungen sind Gegenstand der abhängigen Ansprüche.

Bei einem Ladebordwandsystem zum Anbau an ein Transportfahrzeug, insbesondere Lastkraftfahrzeuge und deren Anhängern, umfassend eine lageveränderliche Ladeplattform, die mittels am Transportfahrzeug zu befestigender Tragwerke mit einer Hub- und Senkbewegung bewegbar ist zum Anheben oder Absenken einer Last auf der Ladeplattform, wobei das Tragwerk einen am Transportfahrzeug befestigten Tragrahmen, einen Tragarm, der an seinem einen Ende schwenkbeweglich an dem Tragrahmen angeordnet ist und dessen anderes Ende schwenkbeweglich die Ladeplattform trägt, sowie einen Hubaktuator aufweist, der die Kraft zum Anheben und Senken der Ladeplattform erzeugt, und an dem Tragwerk ferner ein Unterfahrschutz angeordnet ist mit einer Stoßstange, die zwischen einer Fahrposition und einer weggeschwenkten Ladeposition beweglich ist und mit dem Tragarm verbunden ist, so dass sie beim Anheben und Absenken der Ladeplattform mitbewegt ist, ist erfindungsgemäß vorgesehen, dass die Stoßstange über einen schwenkbaren Lagerbock mittels einer hybriden Zweipunktlagerung an dem Tragarm und dem Tragrahmen angeordnet ist, wobei die hybride Zweipunktlagerung ein reines Drehlager zum Tragarm und ein Translationslager mit Schwenkfreiheitsgrad zum Tragrahmen umfasst.

Nachfolgend seien zuerst einige verwendete Begriffe erläutert: Unter dem Begriff der Fahrposition wird verstanden die Lage, welche die Stoßstange des Unterfahrschutzes einnimmt, wenn das Ladebordwandsystem in der bestimmungsgemäßen Position für den Fahrbetrieb des Fahrzeugs ist. Typischerweise ist die Ladebordwand dann angehoben und ggf. an den Aufbau des Fahrzeugs angeklappt.

Unter dem Begriff der Ladeposition wird verstanden diejenige Position, welche die Stoßstange des Unterfahrschutzes beim Beladen mittels der Ladeladeplattform einnimmt. Insbesondere ist dies die abgesenkte Stellung, wenn die Ladeladeplattform auf der Straßenoberfläche aufliegt; die Stoßstange befindet sich dann in der weggeschwenkten Ladeposition.

Unter einem reinen Drehlager wird ein Drehlager verstanden, dass nur einen Drehfreiheitsgrad hat. Das bedeutet, dass es abgesehen von Lagerspiel keine oder nur eine ganz unwesentliche Translationsbewegung zulässt.

Unter einem Translationslager wird ein Lager verstanden, welches einen Translations-Freiheitsgrad hat, gegebenenfalls mit einem zusätzlichen Freiheitsgrad für eine Schwenkbewegung.

Die Erfindung beruht auf dem Gedanken, die Stoßstange des Unterfahrschutzes mittels eines schwenkbeweglichen Lagerbocks (im Folgenden auch: Schwenkbock) zu haltern, der über eine besondere Zweipunktlagerung an dem Tragwerk angeordnet ist. Diese besondere Zweipunktlagerung ist mit einem Punkt Fahrzeug fest am Tragrahmen gelagert und mit dem anderen Punkt an dem beweglichen Tragarm. Dadurch ergibt sich eine forcierte Schwenkbewegung des insbesondere starren Lagerbocks. Die Erfindung hat weiter erkannt, dass dies alleine nicht ausreicht, sondern dass zusätzlich die Art der Lagerung an den beiden Punkten sich unterscheiden muss. Die Lagerung an dem beweglichen Tragarm erfolgt mittels eines Drehlagers, genauer gesagt mittels eines reinen Drehlagers. Im Gegensatz dazu erfolgt die Lagerung am Tragrahmen mittels eines Translationslagers, welches eine Längsbewegung zulässt und zusätzlich eine Schwenkbewegung.

Die Erfindung erreicht auf diese Weise, dass auf die Schwenkbewegung der Stoßstange von der Fahrposition in die Ladeposition (und umgekehrt) eine zweite Bewegung überlagert wird, nämlich eine Drehbewegung des Lagerbocks. Diese kombinieren sich derart, dass der Momentanpol der Schwenkbewegung sich verschiebt, und zwar nach oben hin. Damit verlagert sich - auch bei unverändertem Schwenkradius - die Schwenkbahn nach oben, sie verläuft somit höher und näher zum Rahmen das Transportfahrzeugs hin. Durch dieses "Hochziehen" wird zum Schwenken weniger Freiraum nach unten benötigt, was eine tiefere Anbringung des Unterfahrschutzes zur Erfüllung der neueren Vorschriften ermöglicht.

Zweckmäßigerweise ist das Translationslager ausgeführt für eine Translationsbewegung in Richtung zum Drehlager der hybriden Zweipunktlagerung und davon weg. Diese Ausrichtung ergibt einen besonders günstigen Bewegungsverlauf, bei dem das erwähnte Hochziehen der Schwenkbahn bereits im mittleren Teil der Schwenkbewegung erfolgt, wenn die Stoßstange am weitesten nach unten ausgelenkt. Damit ergibt sich ein maximaler Effekt in Bezug auf die Gewinnung von Freiraum.

Mit Vorteil weist das Translationslager in der Fahrposition einen Anschlag auf. Damit ist die Position des schwenkbaren Lagerbocks in der Fahrposition gesichert. Zweckmäßigerweise ist der Anschlag formschlüssig ausgeführt. Damit ist der Lagerbock in der Fahrposition fest positioniert. Es ergibt sich so ein wirksamer Schutz vor Ausweichbewegung der Stoßstange auch beim Auftreten von erheblichen Kräften, wie bei einer Kollision durch ein auffahrendes anderes Fahrzeug.

Vorzugsweise ist das Translationslager gebildet durch eine längliche Ausnehmung, längs der ein Zapfen beweglich geführt ist. Damit kann auf robuste und zweckmäßige Weise das Translationslager mit Schwenkfreiheitsgrad für den Zapfen gebildet sein. Hierbei ist mit Vorteil vorgesehen, dass ein geschlossenes Ende der Ausnehmung als Anschlag des Translationslagers in der Fahrposition fungiert. Zu diesem Zweck ist das geschlossene Ende der Ausnehmung zweckmäßigerweise verstärkt und/oder gehärtet. Damit kann es den im alltäglichen Fahrbetrieb, insbesondere auf schlechter Straße, auftretenden Belastungen im allgemeinen und im speziellen auch den besonders hohen Kräften, wie sie beim Aufprall durch ein anderes Fahrzeug entstehen, länger und zuverlässiger standhalten. Mit Vorteil sind die Ausnehmung an dem Lagerbock und der Zapfen stationär am Tragrahmen oder einem seiner Elemente angeordnet; eine umgekehrte Anordnung soll aber nicht ausgeschlossen sein

Zweckmäßigerweise ist die Ausnehmung als ein randnaher Schlitz ausgeführt, der vorzugsweise zum Rand hin offen ist. Auf diese Weise kann der Zapfen einfach in den Schlitz eingeführt werden. Dies erleichtert Montage sowie Demontage und sorgt so für eine wartungsfreundliche Konstruktion.

Mit Vorteil ist die Länge des Schlitzes so bemessen, dass in der Ladeposition der Zapfen im Schlitz an dessen offenem Ende steht. Damit wird eine maximale Translationstrecke bei möglichst kurzem Schlitz erzielt, wodurch die sich durch die Schlitzung unvermeidlich ergebende Schwächung des Lagerbocks minimiert wird.

Vorzugsweise ist die Ausnehmung bzw. der Schlitz im Wesentlichen gerade. Eine gekrümmte Ausführung schließt die Erfindung zwar nicht aus, jedoch hat eine gerade Ausführung den Vorteil der einfacheren Herstellbarkeit. Die gerade Ausführung hat ferner den Vorteil, dass nach einem Unfall und gegebenenfalls beschädigten oder verzogenen Lagerbock dieser leichter ausgezogen werden kann, wenn dies entlang einer Geraden erfolgt. Somit erhöht sich auch die Reparaturfreundlichkeit.

Ferner ist die Länge der Ausnehmung zweckmäßigerweise bestimmt abhängig von einer vorgebbaren Überhöhung eines Bewegungspfads der Stoßstange beim Bewegen zwischen Fahr- und Ladeposition. Durch eine längere Gestaltung der Ausnehmung kann zwar eine größere Überhöhung erzielt werden, aber das ist nicht immer von Vorteil. Die Überhöhung ist das Maß, um das die Schwenkbahn der Stoßstange durch die erfindungsgemäße Gestaltung nach oben versetzt ist. Es besteht bei einer zu großen Überhöhung die Gefahr, dass die Stoßstange im eingeschwenkten Zustand von unten gegen den Rahmen oder andere Fahrzeugteile anschlägt. Daher soll die Länge nicht größer bemessen werden als nötig. Es hat sich bewährt, die Länge der Ausnehmung etwa gleich groß (+/- 30%) wie die Überhöhung zu wählen. Eine obere Grenze ist dadurch gebildet, dass die Stoßstange in der Ladeposition im eingeschwenkten Zustand gerade noch nicht am Tragrahmen bzw. anderen Fahrzeugteilen anschlägt. Eine untere Grenze ist dadurch gebildet, dass bei zu kurzer Bemessung der Länge die Überhöhung nicht ausreicht und die Stoßstange bei der Schwenkbewegung mit der Straßenoberfläche kollidiert und/oder einen erforderlichen Hindernisfreiraum (bspw. für Bordsteine) nicht mehr einhält. Zweckmäßig ist eine Einstellung der Geometrie von Zapfen und Ausnehmung derart, dass in der angehobenen Position der Ladeplattform (wie sie zum Bewegen von Ladung von der Ladeplattform in einen Laderaum des Lastwagens genutzt ist) der Zapfen etwa auf einer Verbindungslinie zwischen den schwenkbeweglichen Lagern an den beiden Enden des Tragarms liegt.

Vorzugsweise ist der Zapfen mit einer Rolle als Lagerkörper versehen. Mit der Rolle ergibt sich eine reibungsärmere Bewegung im Translationslager, und zwar sowohl in Bezug auf die Translationsbewegung wie auch im Hinblick auf die Schwenkbewegung.

Ein weiterer Aspekt der Erfindung liegt darin, dass die Art der Lagerung sozusagen invers ist: an dem beweglichen Tragarm erfolgt die Lagerung fest, während sie an dem feststehenden Tragrahmen durch den zweiten Freiheitsgrad lose ist.

Mit Vorteil ist das Drehlager einstellbar, insbesondere als ein Exzenterlager ausgeführt. Damit kann eine Feinabstimmung bezüglich der Positionierung der Ladeplattform erreicht werden. Insbesondere kann auf diese Weise eine Feineinstellung hinsichtlich eine horizontalen Lage der Ladeplattform eingestellt werden.

Es hat sich bewährt, das Drehlager im Mittelbereich des Tragarms anzuordnen, und zwar vorzugsweise in einem Bereich zwischen 37 und 65 % der wirksamen Länge des Tragarms. Unter der wirksamen Länge des Tragarms wird der Abstand zwischen seinem Lager für die Schwenkbewegung zum Tragrahmen und seinem Lager für die Schwenkbewegung der Ladeplattform verstanden. Damit ergeben sich günstige Hebel-und Längenverhältnisse in Bezug auf die Bewegung des Lagerbocks und auf die Kinematik in Bezug auf die angestrebte Verschwenkung des Lagerbocks im Zuge der Hubbewegung der Ladeplattform.

Mit Vorteil ist das Translationslager höhenversetzt zum schwenkbeweglichen Lager des Tragarms am Tragrahmen angeordnet, vorzugsweise nach oben höhenversetzt. Mit dieser versetzt Positionierung kann die Bahn des Momentanpols der Verschwenkung des Lagerbocks bestimmt werden. Um die angestrebte Anhebung der Schwenkbahn möglichst von Anfang an zu erreichen, ist ein Versatz nach oben hin zweckmäßig. Alternativ oder zusätzlich kann das Translationslager auch weiter nach hinten, also in Richtung zur Ladeplattform, versetzt angeordnet sein. Alternativ oder zusätzlich kann auch vorgesehen sein, dass der Lagerbock sowie das Translationslager seitlich versetzt zum Tragarm am Tragrahmen angeordnet sind. Auf diese Weise ist die Bewegungsbahn des Lagerbocks nicht limitiert durch den Tragarm. Somit ergeben sich größere Freiheiten bei der Positionierung des Lagerbocks und seines Translationslagers.

Zweckmäßigerweise weist der Lagerbock eine dreieckige plattenartige Grundform auf. Dies ergibt eine raumsparend Ausführung, die sich im Wesentlichen entlang der Hauptkraftlinien im Lagerbock erstreckt. Ferner kann damit erreicht werden, dass in der Ladeposition, wenn sowohl der Tragarm seine untere Erstellung erreicht hat wie auch die Stoßstange ihre vorderste und am weitesten angehobenen Stellung erreicht hat, die Unterseite des Lagerbocks im westlichen parallel zur Straßenoberfläche verläuft und damit den maximalen Abstand wahrt. Zu diesem Zweck ist es besonders bevorzugt, wenn der Lagerbock als ein gleichschenkliges Dreieck in Bezug auf die Aufnahme für die Stoßstange mit einer Abweichung von höchstens 15% ausgeführt ist.

Mit Vorteil ist der schwenkbare Lagerbock starr ausgeführt, vorzugsweise als ein Massivkörper. Damit ist er bei kompakten Außenmaßen zur Aufnahme von höchsten Kräften ausgelegt. Das ist ein erheblicher praktischer Vorteil, insbesondere im Fall der Aufnahme von Aufprallkräften bei einer Kollision eines anderen Fahrzeugs mit der Stoßstange des Unterfahrschutzes. Alternativ oder zusätzlich kann ferner vorgesehen sein, dass der Lagerbock im Bereich zwischen Aufnahme der Stoßstange und dem Translationslager verstärkt ausgeführt ist. Damit ist er genau in dem empfindlichen Bereich verstärkt, in dem bei einer Kollision die Hauptbelastung erfolgt. Die Wahrscheinlichkeit, dass der Unterfahrschutz damit einer Kollision standhält, kann dadurch erhöht werden.

Gemäß eines weiteren Aspekts der Erfindung ist das Tragwerk mit dem Tragarm und ggf. weiteren Elementen, insbesondere der Ladeplattform, zweckmäßigerweise so ausgeführt, dass es eine parallelogrammartige Struktur bildet. Dadurch ist bereits vom Grundaufbau eine nahezu gleichbleibende horizontale Lage der Ladeplattform bei dem Anheben und Absenken gesichert. Der zum Tragarm parallele Zweig des Parallelogramms ist vorzugsweise durch einen Klappaktuator gebildet, wobei deren Schwenkgelenke die Eckpunkte des Parallelogramms definieren; alternativ kann der parallele Zweig aber auch durch eine einfache Strebe bzw. Lenker gebildet sein. Letzteres ist insbesondere dann von Interesse, wenn eine Klappfunktion der Ladeplattform mittels anderer Mittel erreicht bzw. nicht erwünscht ist.

Nachfolgend wird unter Bezugnahme auf die Zeichnung eine vorteilhafte Ausführungsform der Erfindung beispielhaft erläutert. Es zeigen:
- Fig. 1: eine Seitenansicht eines Transportfahrzeugs mit einer Ausführungsform für das Ladebordwandsystem mit Unterfahrschutz;
- Fig. 2: eine Ansicht des Unterfahrschutz mit Tragwerk von unten ;
- Fig. 3a)-c): Seitenansichten in verschiedenen Hubphasen;
- Fig. 4: ein schematisierter Seitenriss zu Bewegungsbahnen;
- Fig. 5: eine perspektivische Ansicht eines Tragwerks von schräg hinten;
- Fig. 6: eine perspektivische Ansicht eines Tragwerks von schräg vorne;
- Fig. 7: eine perspektivische Ansicht im abgesenkten Zustand;
- Fig. 8: eine perspektivische Ansicht im angehobenen Zustand;
- Fig. 9: eine perspektivische Ansicht im zugeklappten Zustand;
- Fig. 10: ein Symbol-Diagramm zu dem Ladebordwandsystem; und
- Fig. 11: ein Symbol-Diagramm zu einer Variante des Ladeborwandsystems.

Eine in ihrer Gesamtheit mit der Bezugsziffer 1 bezeichnete Ausführungsform für ein erfindungsgemäßes Ladebordwandsystem mit beweglichem Unterfahrschutz wird nachfolgend beispielhaft beschrieben.

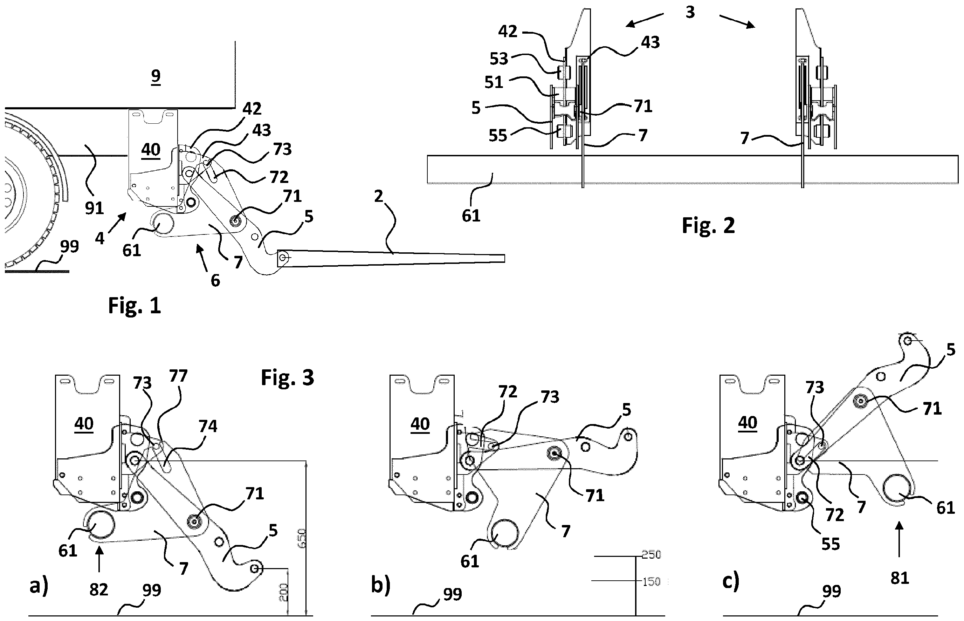

Das Ladebordwandsystem, welches in seiner Gesamtheit mit der Bezugsziffer 1 bezeichnet ist, umfasst als Hauptkomponenten eine flächenförmige Ladeladeplattform 2 sowie ein Tragwerk 3, dass an einem Rahmen 91 am Heck eines Lastkraftwagens 9 angeordnet ist, sowie einen Unterfahrschutz 6. Das Tragwerk 3 ist typischerweise doppelt ausgeführt, einmal linksseitig und rechtsseitig (s. Figur 2).

Die Ladeladeplattform 2 ist hub- und schwenkbeweglich am Tragwerk 3 geführt. Zur Befestigung der Komponenten am Rahmen 91 ist ein Tragrahmen 4 vorgesehen, der versehen ist mit einer Tragkonsole 40, einem Hauptflansch 42 und einem Nebenflansch 43. Für die Hubbewegung ist ein Tragarm 5 vorgesehen, der an einem Ende über ein erstes Schwenklager 51 an dem Hauptflansch 42 des Tragrahmens 4 angeschlagen ist. Am anderen Ende des Tragarms 5 ist über ein zweites Schwenklager 52 die Ladeladeplattform 2 klappbar angeordnet. Der Tragarm 5 weist im Querschnitt ein U-förmiges Profil auf. In dem so gebildeten Innenraum ist ein Hubzylinder 57 angeordnet, der über ein drittes Schwenklager 53, das oberhalb des ersten Schwenklagers 51 angeordnet ist, am Hauptflansch 42 schwenkbeweglich gelagert ist. Das andere Ende des Hubzylinders 57 ist über ein viertes Schwenklager 54 am Tragarm 5 angeschlagen. Ferner am Hauptflansch 42 schwenkbeweglich angeordnet ist ein erstes Ende eines Klappzylinders 58 mittels eines fünften Schwenklagers 55. Das andere Ende des Klappzylinders 58 ist über ein sechstes Klapplager 56 an einem Anschlussflansch 22 der Ladeladeplattform 2 schwenkbeweglich angeordnet. Insgesamt sind zwei Tragwerke 3 vorgesehen, je eines links bzw. rechts von der Längsachse am Heck des Lastkraftwagens 9.

Im dargestellten Ausführungsbeispiel wird von dem Tragarm 5 und dem Klappzylinder 58, die beide einerseits am Hauptflansch 42 und andererseits an der Ladebordwand 2 bzw. deren Anschlussflansch 22 angeschlagen sind, eine Parallelogrammstruktur gebildet. Sie sorgt dafür, dass die Ladeladeplattform 2 beim Heben und Senken etwa parallel zum Erdboden geführt ist. Wie von herkömmlichen Ladebordwandsystem bekannt, wird durch Betätigen des Klappzylinders 58 der Tragarm 5 mit der daran angeordneten Ladeladeplattform 2 angehoben bzw. abgesenkt, und im angehobenen Zustand kann durch Betätigen des Klappzylinders 56 die Ladeladeplattform senkrecht gestellt werden und so an den Aufbau des Lastkraftwagens 9 angeklappt werden.

Der Unterfahrschutz 6 umfasst als Hauptkomponenten eine Stoßstange 61, die quer zur Fahrtrichtung angeordnet und sich praktisch über die volle Breite des Lastkraftwagens 9 erstreckt. Sie ist gehaltert über zwei schwenkbewegliche Lagerböcke 7, die am Tragrahmen 4 sowie am Tragarm 5 angeschlagen sind. Die Lagerböcke 7 sind plattenartig in Dreiecksform ausgeführt, wobei in der Spitze des Dreiecks die Stoßstange 61 aufgenommen ist. Im Bereich der anderen beiden Ecken des Dreiecks sind ein Drehlager 71 sowie ein Translationslager 72 angeordnet. Das Drehlager 71 ist drehbeweglich, und nur drehbeweglich, an einer Seitenfläche des Tragarms 5 gelagert. Über das Translationslager 72 ist der jeweilige Lagerbock 7 an einem Nebenflansch 43 des Tragrahmens 4 angeordnet.

Wie sich insbesondere aus Figur 2 gut ersehen lässt, sind die schwenkbeweglichen Lagerböcke jeweils seitlich von den Tragarm 5 angeordnet, und zwar in dem dargestellten Ausführungsbeispiel jeweils nach innen versetzt. Dies sichert einen ausreichenden Freigang der schwenkbeweglichen Lagerböcke gegenüber den Tragarmen 5 und deren Klappzylinder 58.

Das Translationslager 72 ist so ausgebildet, dass es zum einen eine im Wesentlichen gerade Verschiebung (Translationsbewegung) erlaubt wie auch einen Schwenkfreiheitsgrad aufweist für eine Schwenkbewegung. Dazu weist es eine längliche Ausnehmung 74 auf, die als ein Schlitz ausgeführt ist. Dieser weist ein zum Rand 77 hin offenes Ende 76 auf, wobei es sich bei diesem Rand 77 um die der Tragkonsole 40 zugewandte Randseite des Lagerbocks 7 handelt. In die Ausnehmung 74 aufgenommen ist ein Zapfen 73, der längs der Ausnehmung 74 beweglich ist. Bei der dargestellten Ausführungsform ist die Ausnehmung 74 an dem Lagerbock 7 und der Zapfen 73 stationär an dem Hilfsflansch 43 angeordnet; eine umgekehrte Anordnung soll aber nicht ausgeschlossen sein. An dem dem offenen Ende gegenüberliegenden, geschlossenen Ende der Ausnehmung 74 ist ein formschlüssiger Anschlag 75 ausgebildet. Dieser definiert eine Fahrposition 81 des Unterfahrschutzes 6; erreicht der Zapfen 73 diese Position und liegt am Anschlag 75 an, so befindet sich die Stoßstange 61 in der Fahrposition auf der vorgeschriebenen Höhe (gemäß einschlägigen Verordnungen, bspw. ECE R 58-03). Dies ist in Figur 3c) näher dargestellt. Befindet sich hingegen der Zapfen 73 am offenen Ende 76, so hat der Unterfahrschutz 6 seine Ladeposition 82 erreicht und die Stoßstange 61 ist nach vorne und nach oben unter den Rahmen 91 des Lastwagens 9 bzw. den dort angeordnete Tragrahmen 4 geschwenkt. Dies ist in Figur 3a) näher dargestellt. Sie zeigt den Zustand, in dem die Stoßstange 61 den tiefsten Punkt erreicht. Fig. 3b) zeigt eine Zwischenphase im Schwenkablauf, bei dem die Stoßstange den tiefsten Punkt durchläuft. Man erkennt, dass das Stoßstange 61 deutlich oberhalb der durch den unteren horizontalen Strich symbolisierten Straßenoberfläche 99 bleibt. Der seitliche Höhenmaßstab zeigt, dass in der Höhe ein Freigang von 250 mm erreicht wird. Dies ist zu sehen vor dem Hintergrund eines Vergleichs mit dem Stand der Technik, beispielsweise bei dem in der Beschreibungseinleitung genannten Ladebordwandsystem, das nur einen bedeutend geringeren Freigang erreicht, nämlich lediglich 150 mm, was zur Hindernisfreiheit kaum ausreicht.

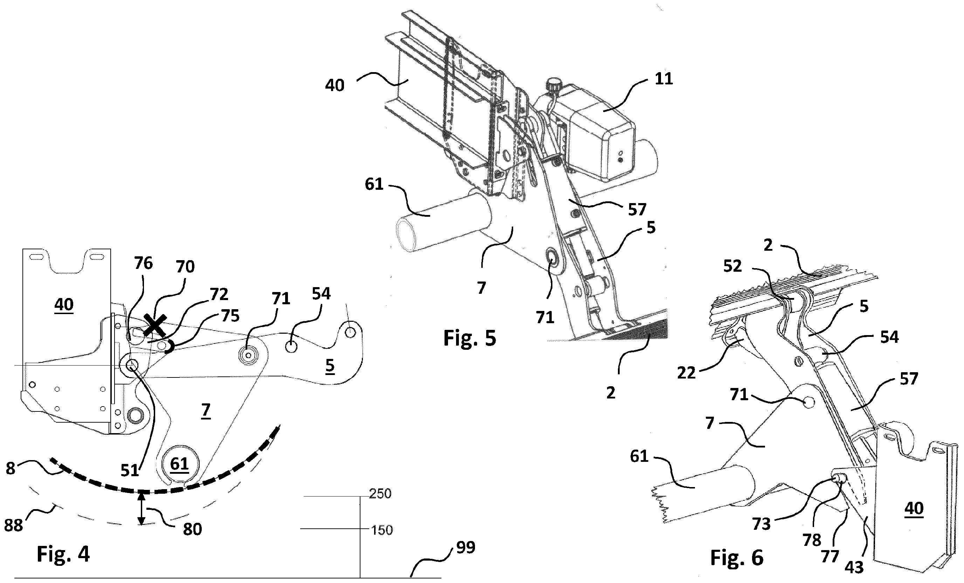

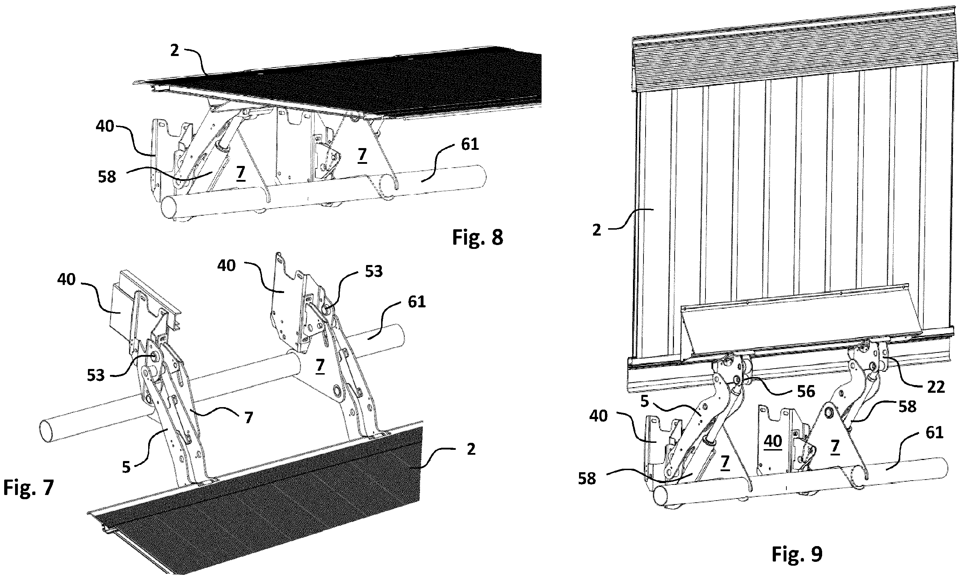

Wie man erkennt durch einen Vergleich der Figuren 3 a) bis c) - wobei ferner auch Bezug zu nehmen ist auf die Figuren 7 bis 9, welche dazu perspektivische Ansichten zeigen - wird dies erreicht dadurch, dass der Lagerbock 7 beim Übergang von der Fahrposition in die Ladeposition sich im den Translationslager 72 bewegt, indem der Zapfen 73 von dem Anschlag 75 am hinteren Ende der Ausnehmung 74 sich nach vorne bewegt zu dem offenen Ende 76. Man erkennt, dass der Lagerbock 7 nicht nur einfach verschwenkt wird, sondern der Momentanpol der Schwenkbewegung wandert nach oben. Dies ist in Figur 4 näher dargestellt wo die ungefähre Lage des Momentanpols 70 eingezeichnet ist. Dies führt dazu, dass der untere Bereich des Lagerbocks 7 mit der Stoßstange 61 sich entlang der durch Fettdruck hervorgehobenen gekrümmten Linie 8 beim Verschwenken bewegt. Zum Vergleich zum Vergleich ist die bisher im genannten Stand der Technik erreichte Bahn durch eine dünne gestrichelte Linie 88 dargestellt. Man erkennt anhand der Überhöhung 80, dass ein deutlicher Höhengewinn von 100 mm erreicht werden kann und so der notwendige Freigang zur Straßenoberfläche 99 auch bei Unebenheiten oder Hindernissen wir Bordsteinen erreicht werden kann.

Figuren 7 bis 9 zeigen perspektivische Ansichten zu wichtigen Positionen der Ladeplattform 2. Fig. 7 zeigt die voll abgesenkte Position, bei der die Ladeplattform 2 zumindest teilweise auf der Straßenoberfläche 99 aufliegt zum einfachen Bewegen von Ladung (nicht dargestellt) auf die Ladeplattform 2.

Figur 8 zeigt die angehobene Position, bei der die Ladeplattform 2 in Höhe eines Laderaum-Bodens des Lastwagens 9 steht zum Bewegen der Ladung von der Ladeplattform 2 in den Laderaum des Lastwagens 9. Figur 9 zeigt die Position nach dem Beladen, wenn die Ladeplattform 2 angehoben und an den Laderaum angeklappt ist.

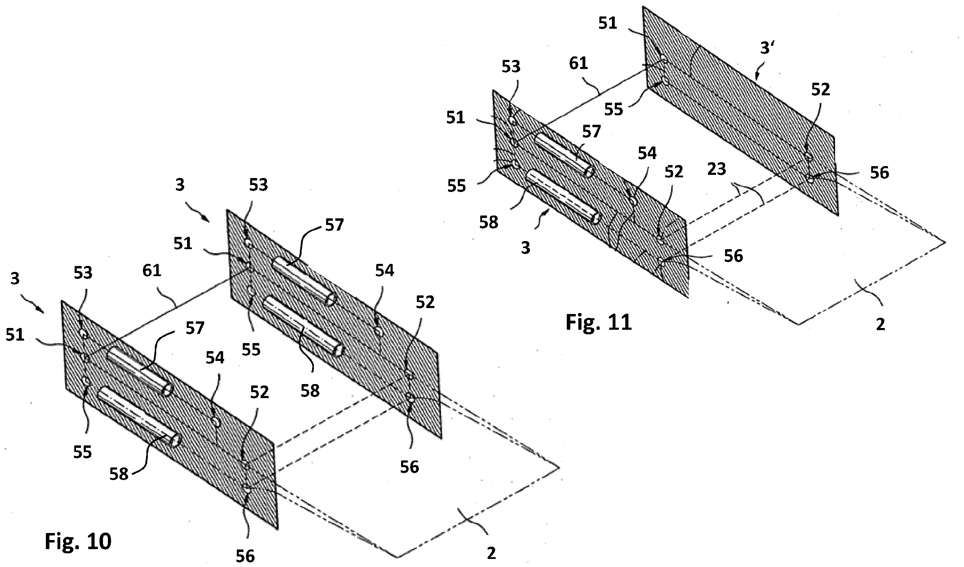

Ein Symbol-Diagramm zu den Tragwerken 3 mit der Ladeplattform 2 ist in Figuren 10 dargestellt. Man erkennt den parallelogrammartigen Aufbau mit dem Tragarm 5 und dem Hubzylinder 57 sowie dem Klappzylinder 58 sowie deren Schwenkgelenken 51 - 56. Der Hubzylinder ist zur besseren Darstellung abgesetzt dargestellt, was nicht mit seiner realen Lage im Tragarm 5 übereinstimmt. Sollte bei einer optionalen Ausführungsform der Klappzylinder 58 fehlen, weil die Klappfunktion auf andere Weise betätigt ist oder entfällt, dann kann er durch einen Lenker ersetzt sein. Beide Tragwerke sind gleich aufgebaut und wirken in der vorstehend beschriebenen Weise.

Eine Variante ist in dem Symbol-Diagramm gemäß Figur 11 dargestellt. Hierbei ist eines der Tragwerke abgewandelt, nämlich das Tragwerk 3' weist im Unterschied zu dem Tragwerk 3 keinen Aktuator zur Betätigung auf. Dies erfolgt allein durch den Hub- und Klappzylinder 57, 58 im Tragwerk 3. Der Klappzylinder 58 ist im Tragwerk 3' durch einen Lenker ersetzt. Die parallelogrammartige Struktur ist somit definiert durch die Schwenkgelenke 51, 52, 55 und 56, was ausreichend ist. Die Betätigung erfolgt somit allein durch den Hub- und Klappzylinder 57, 58 im Tragwerk 3. Die Überleitung der erforderlichen Kräfte und Drehmomente erfolgt zum einen über die Stoßstange 61 des Unterfahrschutzes 6, die schon aufgrund ihrer Hauptfunktion ausreichend kräftig dimensioniert und auch zur Übertragung von Drehmomenten geeignet ist, und über die Ladeplattform 2 mit ihren Anschlussflanschen 22, die insoweit als Kraftübertragungselement 23 fungieren. Somit ist auch eine Ausführung mit nur einem aktiven Tragwerk 3 und einem passiven Tragwerk möglich. Dies hat den Vorteil, dass die Hydraulik und ihre Versorgung nur an einem Tragwerk erforderlich ist, und die mitunter aufwendige Überleitung zu dem anderen Tragwerk 3' somit entfällt. Es sei angemerkt, dass in einer weiteren Variante (nicht dargestellt) optional auch vorgesehen sein kann, dass der Klappzylinder 58 statt im Tragwerk 3 im Tragwerk 3' angeordnet ist. Damit weist jedes der Tragwerke 3, 3' nur einen Zylinder auf, was Vorteile in Bezug auf Gewichtsverteilung und Kompaktheit mit sich bringt.
- 1: Ladebordwandsystem
- 11: Steuergerät

- 2: Ladeladeplattform
- 22: Anschlussflansch
- 23: Kraftübertragungselement

- 3: Tragwerk

- 4: Tragrahmen
- 40: Tragkonsole
- 42: Hauptflansch
- 43: Nebenflansch

- 5: Tragarm
- 51: erstes Schwenklager
- 52: zweites Schwenklager
- 53: drittes Schwenklager (Hubzylinder)
- 54: viertes Schwenklager
- 55: fünftes Schwenklager (Klappzylinder)
- 56: sechstes Schwenklager
- 57: Hubzylinder
- 58: Klappzylinder

- 6: Unterfahrschutz
- 61: Stoßstange

- 7: Lagerbock
- 70: Momentanpol
- 71: Drehlager
- 72: Translationslager
- 73: Zapfen
- 74: Ausnehmung
- 75: Anschlag
- 76: offene Ende
- 77: Rand
- 78: Rolle

- 8: Bewegungsbahn
- 80: Überhöhung
- 81: Fahrposition
- 82: Ladeposition
- 88: Bewegungsbahn gemäß Stand der Technik

## Patentansprüche

1. Ladebordwandsystem zum Anbau an ein Transportfahrzeug, insbesondere Lastkraftfahrzeuge und deren Anhängern, umfassend eine lageveränderliche Ladeplattform (2) , die mittels am Transportfahrzeug zu befestigender Tragwerke (3) mit einer Hub- und Senkbewegung bewegbar ist zum Anheben oder Absenken einer Last auf der Ladeplattform (2), wobei das Tragwerk (3) einen am Transportfahrzeug befestigten Tragrahmen (4), einen Tragarm (5), der an seinem einen Ende schwenkbeweglich an dem Tragrahmen (4) angeordnet ist und dessen anderes Ende schwenkbeweglich die Ladeplattform (2) trägt, sowie einen Hubaktuator (57) aufweist, der die Kraft zum Anheben und Senken der Ladeplattform (2) erzeugt,
und an dem Tragwerk (3) ferner ein Unterfahrschutz (6) angeordnet ist mit einer Stoßstange (61), die zwischen einer Fahrposition und einer weggeschwenkten Ladeposition beweglich ist und mit dem Tragarm (5) verbunden ist, so dass sie beim Anheben und Absenken der Ladeplattform (2) mitbewegt ist,
**dadurch gekennzeichnet, dass**
die Stoßstange (61) über einen schwenkbaren Lagerbock (7) mittels einer hybriden Zweipunktlagerung an dem Tragarm (5) und dem Tragrahmen (4) angeordnet ist, wobei die hybride Zweipunktlagerung ein reines Drehlager (71) zum Tragarm und ein Translationslager (72) mit Schwenkfreiheitsgrad zum Tragrahmen (4) umfasst.

2. Ladebordwandsystem nach Anspruch 1, **dadurch gekennzeichnet, dass** das Translationslager (72) ausgeführt ist für eine Translationsbewegung in Richtung zum Drehlager (71) der hybriden Zweipunktlagerung und davon weg.

3. Ladebordwandsystem nach Anspruch 1 oder 2, **dadurch gekennzeichnet, dass** das mittels des Translationslagers (72) ein Momentanpol (70) der Schwenkbewegung der Stoßstange (61) verschieblich ist und bei der Bewegung in die weggeschwenkte Fahrposition nach oben verlagert ist.

4. Ladebordwandsystem nach einem der vorangehenden Ansprüche, **dadurch gekennzeichnet, dass** das Translationslager (72) gebildet ist durch eine längliche Ausnehmung, längs der ein Zapfen (73) beweglich geführt ist, wobei vorzugsweise der Zapfen (73) stationär und die Ausnehmung (43) beweglich, nämlich am Lagerbock (7), angeordnet ist.

5. Ladebordwandsystem nach Anspruch 4, **dadurch gekennzeichnet, dass** das Translationslager (72) in der Fahrposition einen vorzugsweise formschlüssig ausgeführten Anschlag (75) aufweist, wobei insbesondere ein geschlossenes Ende der Ausnehmung (74) als Anschlag des Translationslagers (72) in der Fahrposition fungiert und vorzugsweise verstärkt und/oder gehärtet ist.

6. Ladebordwandsystem nach Anspruch 4 oder 5, **dadurch gekennzeichnet, dass** die Ausnehmung (74) als ein randnaher Schlitz ausgeführt ist, der vorzugsweise zum Rand (77) hin offen ist, wobei weiter vorzugsweise die Länge des Schlitz so bemessen ist, dass in der Ladeposition der Zapfen (73) im Schlitz an dessen offenem Ende (76) steht.

7. Ladebordwandsystem nach einem der Ansprüche 4 bis 6, **dadurch gekennzeichnet, dass** die Länge der vorzugsweise im Wesentlichen geraden Ausnehmung bestimmt ist abhängig von einer vorgebbaren Überhöhung (80) eines Bewegungspfads (8) der Stoßstange beim Bewegen zwischen Fahr- und Ladeposition, wobei vorzugsweise die Länge gleich oder größer als die Überhöhung ist.

8. Ladebordwandsystem nach einem der Ansprüche 4 bis 7, **dadurch gekennzeichnet, dass** der Zapfen (73) mit einer Rolle (78) als Lagerkörper versehen ist.

9. Ladebordwandsystem nach einem der vorangehenden Ansprüche, **dadurch gekennzeichnet, dass** das Drehlager (71) einstellbar ist, insbesondere als ein Exzenterlager ausgeführt ist.

10. Ladebordwandsystem nach einem der vorangehenden Ansprüche, **dadurch gekennzeichnet, dass** das Drehlager (71) im Mittelbereich des Tragarms (5) angeordnet ist, vorzugsweise in einem Bereich zwischen 37 und 65 % der wirksamen Länge des Tragarms (5).

11. Ladebordwandsystem nach einem der vorangehenden Ansprüche, **dadurch gekennzeichnet, dass** das Translationslager (72) höhenversetzt zum schwenkbeweglichen Lager (51) des Tragarms (5) am Tragrahmen (4) angeordnet ist, vorzugsweise nach oben höhenversetzt.

12. Ladeborwandsystem nach einem der vorangehenden Ansprüche, **dadurch gekennzeichnet, dass** das Tragwerk (3) mit dem Tragrahmen (4), dem Tragarm (5), der Ladeplattform (2) und einem weiteren Lenker als parallelogrammartige Struktur (51, 52, 55, 56) ausgebildet ist, wobei vorzugsweise der weitere Lenker ausgeführt als ein Klappaktuator (56).

13. Ladebordwandsystem nach einem der vorangehenden Ansprüche, **dadurch gekennzeichnet, dass** der Lagerbock (7) sowie das Translationslager (72) seitlich versetzt zum Tragarm (5) am Tragrahmen (4) angeordnet sind.

14. Ladebordwandsystem nach einem der vorangehenden Ansprüche, **dadurch gekennzeichnet, dass** der Lagerbock (7) starr ausgebildet ist, vorzugsweise eine dreieckige plattenartige Grundform aufweist, weiter vorzugsweise als ein gleichschenkliges Dreieck in Bezug auf die Aufnahme für die Stoßstange (61) ausgebildet ist, mit einer Abweichung von höchstens 15%.

15. Ladebordwandsystem nach einem der vorangehenden Ansprüche, **dadurch gekennzeichnet, dass** der Lagerbock (7) ein Massivkörper ist und/oder im Bereich zwischen Aufnahme der Stoßstange (61) und dem Translationslager (72) verstärkt ausgeführt ist.
